# EUROPEAN PATENT APPLICATION

(11) **EP 2 827 258 A1**
(43) Date of publication of application: **21.01.2015**
(21) Application number: 12871113.2
(22) Date of filing: 22.05.2012
(51) Int. Cl.: G06F 17/30

(54) **EMBEDDED NETWORK PROXY SYSTEM, TERMINAL DEVICE AND PROXY METHOD**

(30) Priority: 15.03.2012 CN 201210068843
(71) Applicant: ZTE Corporation, Shenzhen, Guangdong 518057 (CN)
(72) Inventor: MA, Quan, Shenzhen Guangdong 518057 (CN)
(74) Representative: Brevalex
(86) International application number: PCT/CN2012/075893
(87) International publication number: WO 2013/135003

(57) **Abstract**

Disclosed is an embedded network proxy system, including a receiving module, a processing module and a storage module. By configuring information of a preferred website, a wireless network is connected using the Third Generation (3G) protocol, the Fourth Generation (4G) protocol and even Wireless Fidelity (WiFi) in advance, and related contents of the preferred website are downloaded in a local storage module. Thus, even the network signal is poor or a user is in an offline state, the user can browse website information by visiting the locally stored related contents of the preferred website as well. Also disclosed is an operating method for an embedded network proxy system, and disclosed is a terminal device including the embedded proxy system.

## Description

### FIELD

The disclosure relates to the field of embedded network technology, and more particularly to an embedded network proxy system, a terminal device and a proxy method.

### BACKGROUND

With development of wireless Internet technology, especially the popularization of the Third Generation (3G) technology and the progress of the Fourth Generation (4G) technology, almost all mobile terminals are provided with a web-surfing function. Devices including smart phones, intelligent Customer Premise Equipment (CPE) etc. are provided with a high speed data service function. At the same time, Wireless Fidelity (WiFi) technology becomes more and more popular on smart phones and intelligent CPEs. Thus, a user can browse a webpage any time and any where. At the same time, sharing can be also realized by a WiFi Access Point (AP), or a method for accessing the Internet can be selected through a WiFi Station function.

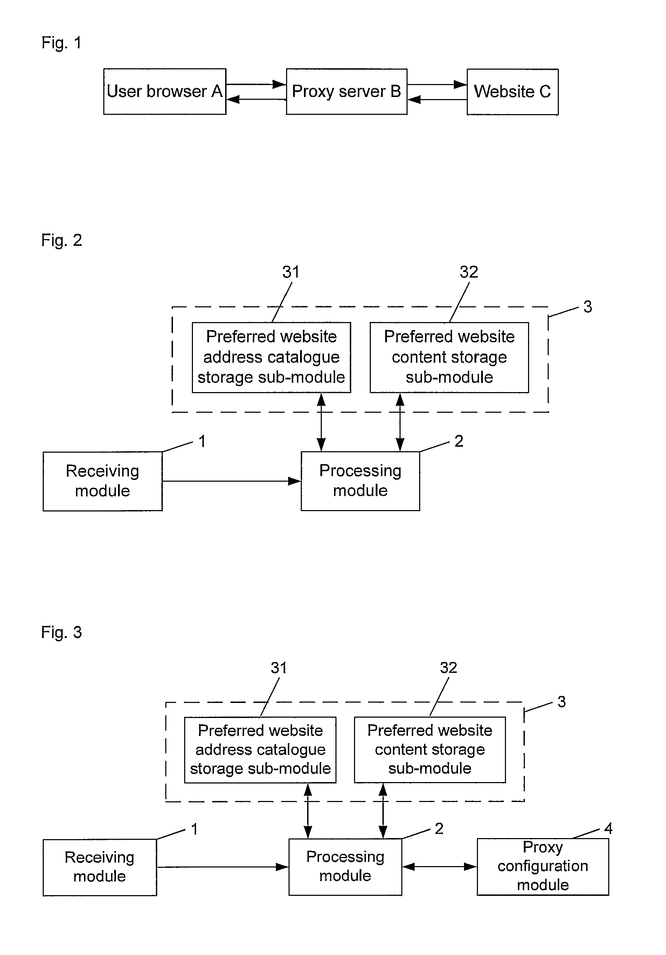

Referring to Fig. 1 which is a structural diagram of an existing system for web-surfing through a proxy server. User A, who visits website C, will send a request to proxy server B; the proxy server B sends the request of the user A to the website C; after the website C replies, the proxy server B then returns information to the user A, wherein the proxy server B is generally a server between a client browser and a web site server; the proxy server B, which is generally provided with a buffer function and a large storage space, is able to obtain new data continuously and store the data on a storage medium, and when other users browse, a local cache of the proxy server B can be visited to improve the browsing speed and efficiency of the users. At the same time, an online proxy further has the advantage of enhanced local access security.

At present, most network proxy servers are large-scale service networks and can provide Internet proxy visit. All existing terminal devices including smart phones etc. are provided with a browser to access the Internet conveniently. However, limited operator network coverage and network signals etc., a user can not browse a webpage normally as required in all cases. At the same time, charges are inevitable during webpage browsing while users expect to browse webpage information more quickly and economically.

### SUMMARY

The major technical problem to be solved by the disclosure is that a communication terminal fails to connect with a network or browse a webpage in a bad network environment or in an offline state.

To solve the problem above, the disclosure provides an embedded network proxy system, including a receiving module, a processing module and a storage module;
the receiving module is configured to receive input address information of a website to be visited, and send the address information of the website to the processing module;
the storage module is configured to store information of a preferred website and feed back the information of the preferred website to the processing module;
the processing module is configured determine whether an input website address is the address of the preferred website according to the received address information of the website; if it is the preferred website address, perform a proxy visit to extract corresponding website content from the storage module; otherwise, perform a general visit to visit the website address directly.

The storage module may include a preferred website address catalogue storage sub-module and a preferred website content storage sub-module;
wherein the preferred website address catalogue storage sub-module is configured to store the website address of the preferred website and feed back website address information of the preferred website to the processing module;
the preferred website content storage sub-module is configured to store related contents of the preferred website;
during the proxy visit, the processing module extracts, according to the website address information fed back by the preferred website address catalogue storage sub-module, the corresponding website content from the preferred website content storage sub-module.

The website content storage sub-module may include a flash memory unit and/or a memory card unit.

The processing module may be connected to a wireless network through the 3G protocol, the 4G protocol or WiFi.

The processing module may be further configured to download content of the preferred website to the storage module.

The network proxy system may further include a proxy configuration module; wherein the proxy configuration module is configured to receive through the processing module the address information of the preferred website that is input and configure the information of the preferred website, and store, through the processing module, the information of the preferred website to the storage module.

The disclosure further provides a terminal device simultaneously, including an input module, a display module and a control module; wherein the control module includes the embedded network proxy system above.

The disclosure further provides an embedded network proxy method simultaneously, including the following steps:
obtaining preferred website address configuration input by a user and store information of the preferred website;
obtaining an address of a website input by the user to be visited;
matching the address of the website input to be visited with the stored address of the preferred website to determine whether the input address of the website belongs to the preferred website; if not matched, performing a general visit to visit webpage content of the website directly;
if matched, performing a proxy visit, visiting a local storage module and extracting webpage content stored in the local storage module.

Matching the address of the website input to be visited with the stored address of the preferred website is implemented by an address filter algorithm or a domain name resolution algorithm.

Before the step of visiting the local storage module and extracting the webpage content stored in the local storage module, the method may further include the following steps: enquiring whether preferred website webpage content is stored in the local storage module; if not, connecting with a network to visit the webpage content on the website and storing the webpage content of the website to the local storage module simultaneously.

After the step of obtaining the preferred website configuration input by the user and storing the information of the preferred website, a network is connected through WiFi in a home network and the content of the preferred website is downloaded to the local storage module.

The disclosure has the following beneficial effects: by setting the address of a preferred website, and using an embedded proxy server system, a webpage content of the preferred website is downloaded to the local storage, and thus when a network signal is poor or in an offline state, the preferred website can be visited through the locally stored webpage content of the preferred website. A home wireless router can be also connected by using WiFi of a terminal device to download the webpage content of the preferred website to the local storage. When required, preferred webpage contents can be browsed offline through locally-stored contents to reduce charges.

### BRIEF DESCRIPTION OF THE DRAWINGS

Fig. 1 is a structural diagram of an existing a system for web-surfing through a proxy server;
Fig. 2 is a structural diagram of an embedded network proxy system in the first embodiment of the disclosure;
Fig. 3 is a structural diagram of another embedded network proxy system in the first embodiment of the disclosure;
Fig. 4 is a working flowchart of an embedded network proxy system in the second embodiment of the disclosure; and
Fig. 5 is a structural diagram of a terminal device in the third embodiment of the disclosure.

### DETAILED DESCRIPTION

The disclosure will be further described in details below through embodiments and in combination with the accompanying drawings.

The disclosure provides such an idea that preferred website content which has been set is downloaded to the local storage through an embedded proxy system, thus the locally-stored preferred website content can be visited directly through the website proxy system when the network signal has poor quality or is in an offline state, which is not affected by the quality of network signals of a network operator.

### Embodiment 1

Referring to Fig. 2, Fig. 2 is a structural diagram of an embedded network proxy system in the present embodiment. The embedded network system includes a receiving module 1, a processing module 2 and a storage module 3, wherein the receiving module 1 is configured to receive address information of a website to be visited (website address for short) that is input, and send the address information of the website to the processing module 2; the storage module 3 is configured to store information of a preferred website and feed back the information of the preferred website to the processing module 2; the processing module 2 is configured to determine whether the input website address is the address of the preferred website according to the received website address information; if it is the preferred website address, perform a proxy visit to extract corresponding website content from the storage module 3, otherwise, perform a general visit to visit the website address directly.

The processing module 2 matches the input website address to be visited and the stored preferred website address by using an address filter algorithm or a domain name resolution algorithm, or other algorithms.

Contents stored by the storage module 3 include preferred website address information and related contents of the preferred website. The processing module 2 matches the preferred website address information stored in the storage module 3 with the received website address to be visited. If they are matched, the corresponding website content stored in the storage module 3 is downloaded and sent to a lower level system to be processed, otherwise, a wireless network is connected directly to visit the related contents of the website.

The storage module 3 may also include a preferred website address catalogue storage sub-module 31 and a preferred website content storage sub-module 32, wherein the preferred website address catalogue storage sub-module 31 may store the website address preferred by a user and the preferred website content storage sub-module 32 may store related contents of the preferred website. Thus, the processing module 2 may match the received website address to be visited with the preferred website address stored in the preferred website address catalogue storage sub-module 31; if they are matched, the related contents of the website are extracted from the preferred website content storage sub-module 32 directly and sent to the lower level system, otherwise, the processing module 2 no longer visits the preferred website content storage sub-module 32 and is connected to the wireless network directly to visit the website address, thereby improving the working efficiency of the embedded network proxy system.

Referring to Fig. 3, Fig. 3 is a structural diagram of another embedded network proxy system in the present embodiment. The preferred website content storage sub-module 32 may further include a FLASH and a Secure Digital (SD) card, wherein the FLASH may store a file required by an operating system and may also store a user file at the same time. The SD card, which may function as a supplement of the FLASH, can store a large amount of user files, and the capacity is configured as required by a user. Of course, the preferred website content storage sub-module 32 does not have to include the FLASH and the SD card, and may only include the FLASH or the SD card according to actual needs.

The processing module 2 may be connected to a wireless network through the 3G protocol or the 4G protocol to visit the network, and may be also connected to a home wireless router through WiFi to be connected to the network. After configuring the preferred website address, the processing module 2 may be connected to the wireless network to download the related contents of the preferred website and store the related contents to the storage module 3. The processing module 2 may be connected to the network through a method preset by the user, e.g. the network is set to be connected to the network periodically by the user, then the network is connected within a period of time designated by the user to download the related contents of the preferred website. The network may be also set to be connected when there is a WiFi signal to perform downloading. Thus, by connecting the network in advance to download the related contents of the preferred website to the local storage module, the related contents of the preferred website can be also visited through the contents stored by the local storage module when network signal is poor or in an offline state. In addition, if a wireless router is connected through WiFi to download the contents of the preferred website, web-surfing charges can be further saved.

The network proxy system may further include a proxy configuration module 4. The proxy configuration module 4 is configured to receive through the processing module 2 the input preferred website address information to configure the information of the preferred website, and store the information of the preferred website to the storage module 3 through the processing module 2. In the meanwhile, a method for connecting the processing module 2 to the network may be also configured by the proxy configuration module 4. When the user configures the preferred website address, the processing module 2 receives the input website address information and sends the website address to the proxy configuration module 4. The proxy configuration module 4 configures the preferred website address information and feeds back the preferred website address information to the processing module 2. The processing module 2 stores the configured website address information in the storage module 3. The related contents of the preferred website may be also configured by the proxy configuration module 4 to be stored in the FLASH or the SD card.

### Embodiment 2

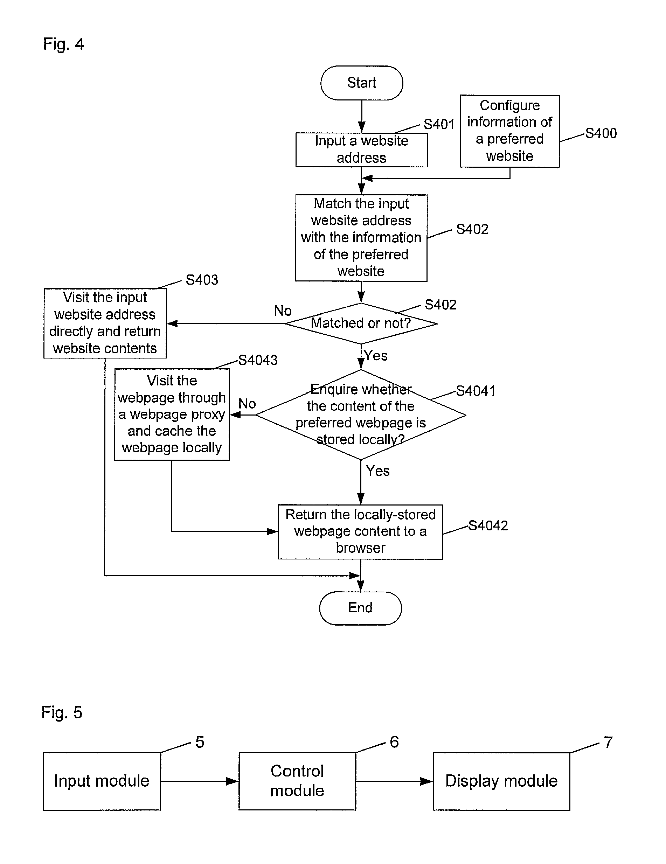

Referring to Fig. 4, Fig. 4 is a working flowchart of an embedded network proxy system in the present embodiment. The embedded network proxy system works according to the following steps.

S401: A user inputs a website address to be visited; a receiving module 1 receives the input website address to be visited and sends the received website address to be visited to a processing module 2;

S402: The processing module 2, based on the received website address to be visited, invokes preferred website address information stored in a storage module 3 and matches the preferred website address information with the received website address to be visited; if they are matched, S404 is executed; otherwise, S403 is executed;

S403: the processing module 2 is connected to a wireless network to visit the website address to perform a general visit, and returns related contents of the website to be processed by a lower level system;

S404: The processing module 2 visits the preferred website content stored in the storage module 3 to perform a proxy visit and outputs the preferred website content to the lower level system; the stored preferred website content may be downloaded and stored in advance through connecting with a network by the 3G protocol, the 4G protocol and WiFi etc.;

Before the user inputs the website address to be visited in S401, S400 may be further included to receive a preferred website address input by a user, configure a preferred website and store the configured preferred website address information to the storage module 3.

S404, in which the processing module 2 visits the preferred website content stored in the storage module 3 may include the following steps:

S4041: the processing module 2 enquires whether the related contents of the preferred website is stored in the storage module 3; if stored, S 4042 is executed; otherwise, S 4043 is executed;

S4042: the preferred website content stored in the storage module 3 is visited and output to the lower level system;

S4043: the website content is visited by connecting with the network, the related contents of the website are downloaded to the local storage module 3 and output to the lower level system.

### Embodiment 3

Referring to Fig. 5, Fig. 5 is a structural diagram of a terminal device in the present embodiment. The communication terminal includes an input module 5, a control module 6 and a display module 7, wherein the input module 5 may be a device like a keyboard etc. for a user to input a website address to be visited or the address of a preferred website address or other related information. The display module 7 is configured to display website information etc. The control module 6 includes the embedded network proxy system of the first embodiment and is capable of downloading preferred website content to a local storage module in advance in a set form so that related contents of the preferred website can be visited by the user when the network signal is poor or in an offline state.

The above contents are detailed descriptions of the disclosure with reference to the embodiments, and the embodiments of the disclosure should be regarded to be limited to these descriptions. For those of ordinary skill in the technical field to which the disclosure belongs, some simple deduction or replacement may further be made under the premise of not departing from the conception of the disclosure, and should all be regarded as falling within the protection scope of the disclosure.

## Claims

1. An embedded network proxy system, comprising a receiving module, a processing module and a storage module;
wherein the receiving module is configured to receive address information of a website input to be visited, and send the address information of the website to the processing module;
the storage module is configured to store information of a preferred website and feed back the information of the preferred website to the processing module;
the processing module is configured to determine whether a website address that is input is an address of the preferred website according to the address information of the website which is received; if identical, then perform a proxy visit to extract corresponding website content from the storage module; otherwise, perform a general visit to visit the website address directly.

2. The embedded network proxy system according to claim 1, wherein the storage module comprises a preferred website address catalogue storage sub-module and a preferred website content storage sub-module;
the preferred website address catalogue storage sub-module is configured to store the website address of the preferred website and feed back website address information of the preferred website to the processing module;
the preferred website content storage sub-module is configured to store related contents of the preferred website;
during the proxy visit, the processing module extracts, according to the website address information fed back by the preferred website address catalogue storage sub-module, the corresponding website content from the preferred website content storage sub-module.

3. The embedded network proxy system according to claim 2, wherein the website content storage sub-module comprises a flash memory unit and/or a memory card unit.

4. The embedded network proxy system according to any one of claims 1 to 3, wherein the processing module is connected to a wireless network through a Third Generation (3G) protocol, a Fourth Generation (4G) protocol or Wireless Fidelity (WiFi).

5. The embedded network proxy system according to claim 4, wherein the processing module is further configured to download content of the preferred website to the storage module.

6. An embedded network proxy system according to any one of claims 1 to 3, further comprising a proxy configuration module, wherein the proxy configuration module is configured to receive, through the processing module, information of the address of the preferred website that is input and configure the information of the preferred website, and store, through the processing module, the information of the preferred website to the storage module.

7. A terminal device comprising an input module, a display module and a control module; wherein the control module comprises the embedded network proxy system according to any one of claims 1 to 6.

8. An embedded network proxy method, comprising:
obtaining preferred website address configuration input by a user and storing preferred website information;
obtaining an address of a website input by the user to be visited;
matching the address of the website input to be visited with a preferred website address stored to determine whether the address of the website input to be visited belongs to a preferred website; if not match, performing a general visit to visit webpage content of the website directly;
if match, performing a proxy visit, visiting a local storage module and extracting webpage content stored in the local storage module.

9. The embedded network proxy method according to claim 8, wherein matching the address of the website input to be visited with the preferred website address stored is implemented by an address filter algorithm or a domain name resolution algorithm.

10. The embedded network proxy method according to claim 8, further comprising: before visiting the local storage module and extracting the webpage content stored in the local storage module, enquiring whether preferred website webpage content is stored in the local storage module; if not, connecting with a network to visit the webpage content of the website and storing the webpage content of the website to the local storage module simultaneously.

11. The embedded network proxy method according to any one of claims 8 to 10, wherein after obtaining the preferred website address configuration input by the user and storing the preferred website information, a network is connected through WiFi in a home network and preferred website content is downloaded to the local storage module.
